# FASCICULE DE BREVET EUROPEEN

(11) **EP 3 936 873 B1**
(45) Date de publication et mention de la délivrance du brevet: **14.02.2024**
(21) Numéro de dépôt: 21174017.0
(22) Date de dépôt: 17.05.2021
(51) Int. Cl.: G01H 1/00, G01P 15/18

(54) **ACCÉLÉROMÈTRE INDUSTRIEL TRIAXIAL**
INDUSTRIELLER TRIAXIALER BESCHLEUNIGUNGSAUFNEHMER
TRIAXIAL INDUSTRIAL ACCELEROMETER

(30) Priorité: 07.07.2020 FR 2007175
(43) Date de publication de la demande: 12.01.2022
(73) Titulaire: Autovib, 25480 Miserey Salines (FR)
(72) Inventeur: BRUNNER, Ange, 25480 MISEREY-SALINES (FR)
(74) Mandataire: IP Trust

(56) Documents cités:
- US-A1- 2005 122 100
- US-A1- 2011 295 546
- US-A1- 2016 003 863

## Description

### DOMAINE DE L'INVENTION

La présente invention concerne un accéléromètre triaxial qui peut trouver son application pour la mesure de vibrations des machines industrielles, notamment de machines tournantes.

### ARRIERE PLAN TECHNOLOGIQUE DE L'INVENTION

L'état mécanique d'une machine industrielle telle qu'une machine tournante (un compresseur, une turbine, une pompe par exemple) peut être surveillé par la mesure et l'analyse de ses vibrations. Traditionnellement, la mesure de vibrations est réalisée par l'intermédiaire d'un accéléromètre piézoélectrique qui est rendu solidaire, généralement par l'intermédiaire d'un goujon de fixation, d'un élément vibrant de la machine. Ce type d'accéléromètre est disponible en version triaxiale, c'est-à-dire qu'il est apte à fournir des mesures selon trois axes de mesure d'un trièdre rectangle, de manière à caractériser pleinement les phénomènes vibratoires de la machine. Les accéléromètres piézoélectriques présentent l'avantage d'avoir un comportement linéaire sur une gamme étendue de fréquences (entre quelques dixièmes de Hz et 10kHz ou 20kHz) et de présenter une large gamme dynamique (par exemple compris entre 1g et 5g). Ils sont toutefois relativement encombrants et onéreux.

On connaît également des capteurs d'accélération se présentant sous la forme de circuits intégrés microélectromécaniques, fabriqués à l'aide des techniques de la microélectronique, et souvent désignés « accéléromètre MEMS » (de l'acronyme anglo-saxon « Micro ElectroMechanical Systems » ou « système microélectromécanique »). Ces capteurs sont généralement très compacts, relativement peu coûteux, mais présentent toutefois des caractéristiques qui ont réservé leurs applications à la mesure d'une accélération « statique » ou présentant une fréquence réduite, typiquement inférieure à quelques kHz. Ces caractéristiques les rendent incompatibles avec la surveillance vibratoire des machines industrielles pour lesquels la gamme de fréquences à surveiller s'étend typiquement de 0,1 Hz à 10kHz ou 20kHz.

Plus récemment, les avancées dans le domaine des systèmes microélectromécaniques ont permis de proposer des capteurs MEMS monoaxiaux, l'axe de mesure s'étendant dans le plan du capteur, pouvant opérer des mesures d'accélération dans des gammes de fréquences plus élevées, jusque 20kHz voire même 40 kHz. Cette gamme étendue de fréquences, combinée à un rapport de signal sur bruit réduit et à une dynamique de mesure augmentée vis-à-vis des accéléromètres de la génération antérieure permettent d'envisager d'exploiter ces capteurs dans le domaine de la surveillance vibratoire des machines industrielles. Toutefois, ces composants ne sont pas disponibles dans une configuration triaxiale, ce qui forme un frein important à leurs utilisations.

On connaît des documents US20110295546 et US2016003863 des accéléromètres triaxiaux combinant une pluralité de capteurs MEMS agencés sur une pluralité de circuits imprimés planaires pour former une structure 3D, de sorte à placer les axes de mesures des capteurs MEMS selon les 3 axes du trièdre rectangle de mesure de l'accéléromètre. Cette solution ne convient toutefois pas, car l'assemblage 3D des circuits imprimés est complexe à réaliser, peu compact, et surtout, conduit à faire apparaître des résonances parasites sur la réponse en fréquence de l'accéléromètre, ce qui perturbe la mesure et la rend peu fidèle.

Le document US2005122100 propose quant à lui d'assembler un capteur magnétique verticalement, sur sa tranche pour fournir une mesure selon un axe vertical. Cette approche peu conventionnelle n'est pas déployable industriellement.

### OBJET DE L'INVENTION

Un but de l'invention est de proposer un accéléromètre triaxial remédiant au moins en partie à ces inconvénients. Plus précisément, la présente invention vise à fournir un accéléromètre industriel triaxial comprenant des capteurs aptes à fournir des signaux d'accélération et se présentant sous la forme de circuits intégrés microélectromécaniques, l'accéléromètre industriel pouvant être exploité pour la surveillance vibratoire d'une machine industrielle, et notamment d'une machine tournante. La présente invention vise notamment à fournir un accéléromètre industriel triaxial plus fidèle que ceux, ayant recours à des capteurs microélectromécaniques, proposés dans l'état de la technique.

### BREVE DESCRIPTION DE L'INVENTION

En vue de la réalisation de ce but, l'objet de l'invention propose un accéléromètre industriel apte à fournir des mesures selon trois axes de mesure d'un trièdre rectangle notamment pour la surveillance vibratoire d'une machine industrielle, l'accéléromètre comprenant un premier et un second circuit intégré microélectromécanique disposés sur un circuit imprimé planaire ;
- le premier circuit intégré s'étendant selon un premier plan et constituant un premier capteur triaxial apte à fournir des signaux d'accélération selon les trois axes de mesure, deux axes de mesure résidant dans le premier plan ;
- le second circuit intégré s'étendant selon un second plan et constituant un second capteur monoaxial apte à fournir un signal d'accélération selon un axe unique de mesure résidant dans le second plan.

Selon l'invention, le premier et le second circuit intégrés sont agencés sur le circuit imprimé planaire de sorte que l'axe unique de mesure du second capteur soit parallèle à l'un des deux axes de mesure résidant dans le premier plan du premier capteur, les deux autres axes étant désignés comme les « axes préservés ». Les mesures fournies par l'accéléromètre industriel sont composées du signal d'accélération du second capteur et des deux signaux d'accélération selon les deux axes préservés du premier capteur.

Selon d'autres caractéristiques avantageuses et non limitatives de l'invention, prises seules ou selon toute combinaison techniquement réalisable :
- le premier circuit intégré et le second circuit intégré sont respectivement disposés sur deux faces opposées du circuit imprimé planaire ;
- le premier circuit intégré et le second circuit intégré sont disposés sur une même face du circuit imprimé planaire ;
- le circuit imprimé planaire est disposé dans un corps rigide tubulaire ;
- le circuit imprimé planaire est relié à un connecteur électrique ou un câble intégral;
- le circuit imprimé planaire est rigide ;
- le circuit imprimé planaire est flexible ;
- le circuit imprimé planaire porte également un circuit de conditionnement ;
- le second capteur monoaxial présente au moins une caractéristique améliorée en comparaison aux caractéristique du premier capteur triaxial.

Selon un autre aspect, l'invention propose également une utilisation d'un accéléromètre industriel tel qu'exposé précédemment pour la surveillance vibratoire d'une machine industrielle présentant un axe principal de vibration, l'utilisation comprenant la fixation de l'accéléromètre sur la machine industrielle de telle sorte que l'axe unique de mesure du second capteur soit parallèle à l'axe principal de vibration de la machine industrielle.

Selon un autre aspect encore, l'invention propose un système comprenant une machine industrielle présentant un axe principal de vibration et, fixée sur cette machine industrielle, un accéléromètre industriel conforme à l'invention, l'axe unique de mesure du second capteur étant parallèle à l'axe principal de vibration.

### BREVE DESCRIPTION DES FIGURES

D'autres caractéristiques et avantages de l'invention ressortiront de la description détaillée de l'invention qui va suivre en référence aux figures annexées sur lesquels :

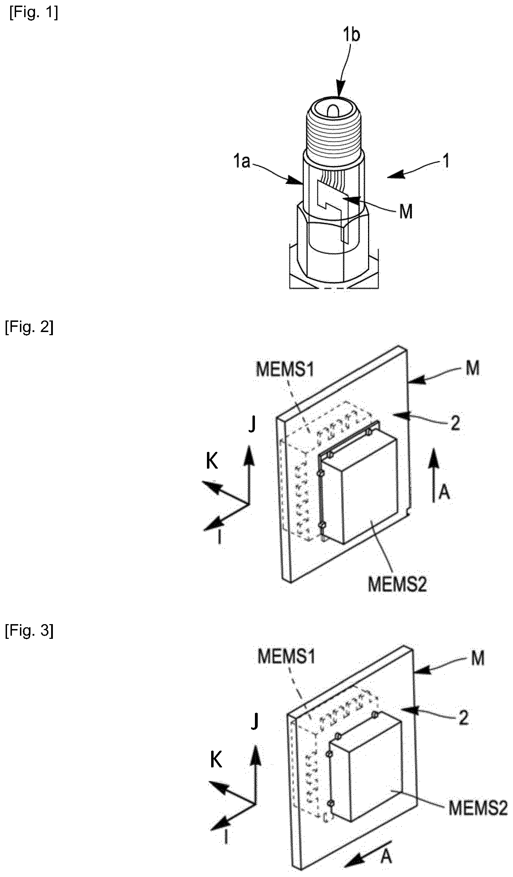

[Fig. 1] La figure 1 représente un accéléromètre industriel conforme à un mode de mise en oeuvre ;
[Fig. 2]
[Fig. 3] Les figures 2 et 3 représentent schématiquement deux modes de réalisation de l'électronique de mesure d'un accéléromètre conforme à l'invention ;
[Fig. 4]

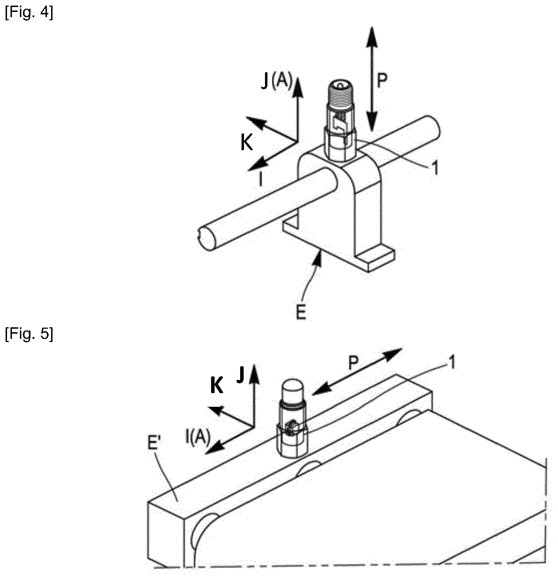

[Fig. 5] Les figures 4 et 5 illustrent l'utilisation d'un accéléromètre conforme à l'invention pour la surveillance vibratoire d'un roulement et d'un tapis.

### DESCRIPTION DETAILLEE DE L'INVENTION

Par souci de simplification de la description à venir, les mêmes références sont utilisées pour des éléments identiques ou assurant la même fonction dans les différents modes de mise en oeuvre exposés de l'invention.

La figure 1 représente un accéléromètre industriel 1 conforme à un mode de mise en oeuvre. L'accéléromètre 1 est ici formé d'un corps rigide tubulaire constituant un boîtier 1a dans lequel est logée l'électronique de mesure M. Le corps rigide peut être en acier ou en aluminium. Un perçage fileté réalisé à une première extrémité du corps rigide permet de fixer l'accéléromètre à une machine industrielle, par l'intermédiaire d'un goujon de fixation. L'autre extrémité du corps rigide, comporte un connecteur électrique 1b afin de relier l'accéléromètre 1 à l'aide d'un câble adapté à un système d'analyse déporté, comme cela est bien connu en soi.

D'autres configurations d'accéléromètres industriels sont bien entendu possibles. Le corps rigide peut notamment présenter une forme autre que la forme tubulaire prise ici en exemple. Il peut par exemple présenter la forme d'un parallélépipède. La fixation par goujon, même si elle constitue la forme préférée de fixation, n'est pas non plus nécessaire, et on peut envisager de fixer l'accéléromètre à la machine industrielle à surveiller par tout autre moyen, par exemple par l'intermédiaire d'un adhésif ou par aimantation. De la même manière, le connecteur électrique 1b tel que représenté sur la figure 1 ne forme pas une caractéristique essentielle, et on peut prévoir que l'électronique de mesure M soit apte à transmettre les mesures d'accélération au système d'analyse déporté par tous moyens adaptés et selon tout format et tout standard, par exemple par transmission sans fil de ces mesures après leurs conversions numériques ou analogiquement par liaison 2 ou 3 fils, par exemple selon le standard IEPE (de l'expression anglo-saxonne « Integrated Electronic PiezoElectric »). On peut également prévoir que l'accéléromètre industriel 1 ne présente aucun connecteur et que l'électronique de mesure soit directement reliée à un câble intégral de liaison inamovible.

Quelle que soit la forme exacte prise par l'accéléromètre industriel 1 celui-ci est dit « triaxial », c'est-à-dire qu'il est apte à fournir des mesures d'accélération selon les trois axes de mesure d'un trièdre rectangle, ces mesures étant élaborées par l'électronique de mesure M dont deux modes de réalisation sont schématisés sur les figures 2 et 3.

En référence à ces figures, l'électronique de mesure M comprend un circuit imprimé planaire 2 sur lequel sont disposés les différents composants électroniques. Par « circuit imprimé planaire » on désigne un circuit imprimé résidant dans un plan unique, et préférentiellement un unique circuit imprimé plan. Le circuit imprimé n'est pas formé d'une pluralité de circuits imprimés assemblés entre eux en 3D comme cela est le cas dans les solutions de l'état de la technique, l'électronique de mesure M est donc simple à fabriquer, compacte, et n'est pas ou peu susceptible de faire apparaître des résonances parasites sur la réponse en fréquence de l'accéléromètre 1.

Le circuit imprimé planaire 2 peut être une plaque rigide, par exemple constituée de couches isolantes en époxy renforcés par une trame de fibres de verre. Alternativement, il peut être choisi pour être flexible et fabriqué à partir d'une matière isolante fine, par exemple en polyimide. Dans tous les cas, le circuit imprimé planaire 2 forme un support pour tous les composants de l'électronique de mesure M et les relie électriquement par l'intermédiaire de pistes conductrices, comme cela est bien connu en soi. Une nappe (non représentée sur les figures) peut relier l'électronique de mesure au connecteur 1b, lorsqu'un tel connecteur est prévu. Le circuit imprimé 2 peut être simple face ou double face, et donc les composants disposés sur une seule face du circuit imprimé planaire 2 ou disposés sur les deux faces opposées de ce circuit imprimé 2.

Sur les représentations schématiques des figures 2 et 3, le circuit imprimé planaire 2 porte un premier circuit intégré microélectromécanique MEMS1 et un second circuit intégré microélectromécanique MEMS2 constituant deux capteurs d'accélération différents. Le premier circuit intégré MEMS1 et le second circuit intégré MEMS2 sont ici respectivement disposés sur deux faces opposées du circuit imprimé planaire 2, mais on pourrait envisager de les disposer sur une même face de ce circuit 2, par exemple côte à côte. Dans tous les cas, l'utilisation d'un unique circuit imprimé planaire permet de les disposer à proximité l'un de l'autre afin qu'ils soient précisément soumis aux mêmes accélérations.

Bien entendu, d'autres composants peuvent être prévus, notamment ceux composant un circuit de conditionnement des signaux d'accélération fournis par les deux capteurs MEMS1, MEMS2 en vue de former les mesures rendues disponibles sur le connecteur 1b de l'accéléromètre industriel 1 ou transmises analogiquement ou numériquement par tout autre moyen. Ce conditionnement peut correspondre à une amplification des signaux d'accélération, à leur filtrage, à la compensation des dérives ou biais liés à la température. Il peut mettre en oeuvre des traitements analogiques ou numériques. On peut également prévoir de placer sur le circuit imprimé planaire 2 un circuit d'alimentation et/ou de régulation de l'alimentation des circuits intégrés microélectromécaniques MEMS1, MEMS2.

Revenant à la description des figures 2 et 3, le premier circuit intégré MEMS1 constitue un premier capteur triaxial apte à fournir des signaux d'accélération selon les trois axes de mesure I, J, K de l'accéléromètre industriel 1. Le premier circuit MEMS1 définit et s'étend dans un premier plan. Il présente dans ce premier plan deux axes de mesure I, J perpendiculaires entre eux. Le premier circuit MEMS1 comprend également un troisième axe de mesure K disposé selon une direction perpendiculaire au premier plan. Le second circuit intégré MEMS2 constitue un second capteur monoaxial apte à fournir un signal d'accélération selon un axe unique de mesure A. Le second circuit intégré MEMS2 définit et s'étend dans un second plan. L'axe unique de mesure A réside dans ce second plan. Les premier et second plans des circuits intégrés MEMS1, MEMS2 correspondent à leur plan d'assemblage, c'est-à-dire que lorsque ces circuits MEMS1, MEMS2 sont fonctionnellement montés sur un circuit imprimé, les premier et second plans sont l'un et l'autre coplanaires au circuit imprimé.

Comme cela a été présenté dans la partie introductive de cette demande, le second capteur monoaxial MEMS2 présente des caractéristiques améliorées en comparaison aux caractéristiques du premier capteur triaxial MEMS1. Par exemple, le second capteur MEMS2 peut présenter une sensibilité constante (à 10% près) sur une gamme de fréquences plus étendue que celle du premier capteur MEMS1. La gamme fréquentielle de sensibilité constante peut ainsi s'étendre entre 0,2Hz et 10kHz voire même 20kHz pour le second capteur MEMS2, et être limitée à la gamme fréquentielle comprise entre 0,2 Hz et 4kHz ou 6kHz pour le premier capteur MEMS1. Alternativement, ou en complément, le bruit de mesure du second capteur MEMS2, par exemple de 30 micro-g par racine de Hz ou moins, est inférieur au bruit de mesure du premier capteur MEMS1, qui peut être de l'ordre de 80 micro-g par racine de Hz ou plus. Ou la dynamique de mesure du second capteur MEMS2 (qui peut être de l'ordre de 100g ou plus) est strictement supérieure à la dynamique de mesure du premier capteur MEMS1 (qui peut être de l'ordre de 40g).

Pour tirer profit des meilleures performances du second capteur MEMS2 relativement au premier, on prévoit d'agencer le premier circuit intégré MEMS1 et le second circuit intégré MEMS2 sur le circuit imprimé planaire 2 de sorte que l'axe unique de mesure A du second capteur soit parallèle à l'un des deux axes I, J de mesure du premier capteur MEMS1 résidant dans le premier plan du premier circuit intégré MEMS1.

Ainsi sur les figures 2 et 3, le premier circuit intégré MEMS1 constituant le premier capteur triaxial présente deux axes de mesure I, J dans le premier plan et coplanaire au circuit imprimé planaire 2 et un axe de mesure K normal au circuit imprimé 2. Le second circuit intégré MEMS2 constituant le second capteur monoaxial présente un axe unique A de mesure dans le second plan, également coplanaire au circuit imprimé planaire 2. Les deux circuits intégrés MEMS1, MEMS2 sont orientés l'un par rapport à l'autre pour aligner l'axe unique de mesure A du second circuit intégré MEMS2 avec l'un des deux axes coplanaires I, J du premier circuit intégré MEMS1, ce qui résulte dans les deux configurations possibles respectivement représentées sur les figures 2 et 3. On désignera dans la suite de cette description par « axes préservés » les axes de mesure du premier circuit intégré MEMS1 qui ne sont pas parallèles à l'axe unique de mesure A du second circuit intégré MEMS2.

Pour élaborer les mesures fournies par l'accéléromètre industriel 1, on substitue le signal fourni par le premier capteur MEMS1 selon l'axe I,J parallèle à l'axe unique de mesure A, par le signal fourni par le second capteur MEMS2. En d'autres termes, les mesures fournies par l'accéléromètre industriel 1 sont composées du signal d'accélération du second capteur MEMS2 et des deux signaux d'accélération selon les deux axes préservés du premier capteur MEMS1.

On profite de la sorte des caractéristiques améliorées du second capteur MEMS2. La mesure d'accélération fournie par l'accéléromètre 1 selon l'axe du trièdre rectangle correspondant à l'axe unique de mesure A du second capteur MEMS2 est naturellement plus représentative de l'accélération réelle. De préférence, l'accéléromètre 1 est disposé sur un équipement industriel pour en faire la surveillance vibratoire de sorte que l'axe du trièdre rectangle correspondant à l'axe unique de mesure A du second capteur MEMS2 soit en partie au moins parallèle à la composante principale du vecteur d'accélération à mesurer. On peut de la sorte tirer profit de toute la dynamique de mesure disponible sur chacun de ces trois axes.

Les deux configurations représentées sur les figures 2 et 3 permettent, lorsque l'électronique de mesure M est disposée dans un même corps rigide de boîtier 1a, de disposer d'accéléromètres dont l'axe unique de mesure A du second capteur MEMS2 peut être respectivement orienté selon deux directions différentes (et perpendiculaire entre elles). On peut de la sorte équiper des machines industrielles d'axes principaux de vibration variés avec un accéléromètre présentant le même facteur de forme.

A titre d'illustration de l'utilisation d'un accéléromètre 1 conforme à l'invention, on a représenté sur la figure 4 une mesure vibratoire d'un roulement, cet agencement formant une machine E. L'axe vibratoire principal P d'une telle mesure est perpendiculaire à l'axe d'un arbre, ici perpendiculaire à la surface de montage sur un palier. Dans cette configuration l'agencement de la figure 2 permet d'aligner l'axe unique de mesure A du second capteur MEMS2 avec l'axe principal vibratoire P. Lorsque l'accéléromètre 1 comprend un corps rigide tubulaire de boîtier comme cela est représenté sur la figure 4, l'axe unique de mesure peut être aligné à l'axe longitudinal du corps tubulaire. La figure 5 représente une mesure vibratoire d'un tapis ou d'une trémie circulant en translation selon une direction principale qui définit l'axe vibratoire principal P de cette machine E'. Dans ce cas, l'agencement de la figure 3 permet d'aligner l'axe de mesure A du second capteur MEMS2 avec l'axe principal vibratoire P de cette machine E'. Lorsque l'accéléromètre 1 comprend un corps rigide tubulaire de boîtier comme cela est représenté sur la figure 5, l'axe unique de mesure peut être perpendiculaire à l'axe longitudinal du corps tubulaire.

On note que pour les machines présentant un axe vibratoire principal, le besoin d'une mesure sur les deux autres axes sont moins exigeant : l'étendue de la gamme de fréquence, la dynamique et/ou le niveau de bruit attendus peut être moindre que selon l'axe principal.

Bien entendu l'invention n'est pas limitée aux modes de mise en oeuvre décrits et on peut y apporter des variantes de réalisation sans sortir du cadre de l'invention tel que défini par les revendications.

## Revendications

1. Accéléromètre industriel (1) apte à fournir des mesures selon trois axes de mesure d'un trièdre rectangle notamment pour la surveillance vibratoire d'une machine industrielle (E, E'), l'accéléromètre (1) comprenant un premier et un second circuits intégrés microélectromécaniques (MEMS1, MEMS2) disposés sur un circuit imprimé planaire (2);
- le premier circuit intégré (MEMS1) s'étendant selon un premier plan et constituant un premier capteur triaxial apte à fournir des signaux d'accélération selon les trois axes de mesure (I, J, K), deux axes de mesure (I, J) résidant dans le premier plan;
- le second circuit intégré (MEMS2) s'étendant selon un second plan et constituant un second capteur monoaxial apte à fournir un signal d'accélération selon un axe unique de mesure (A) résidant dans le second plan, le second capteur monoaxial (MEMS2) présente au moins une caractéristique améliorée en comparaison aux caractéristiques du premier capteur triaxial (MEMS1) ;
les premier et second plans étant l'un et l'autre coplanaires au circuit imprimé et le premier et le second circuit intégrés (MEMS1, MEMS2) étant agencés sur le circuit imprimé planaire (2) de sorte que l'axe unique de mesure (A) du second capteur (MEMS2) soit parallèle à l'un des deux axes de mesure (I ; J) résidant dans le premier plan du premier capteur (MEMS1), les deux autres axes (J,K ; I,K) étant désignés comme les « axes préservés», les mesures fournies par l'accéléromètre industriel (1) étant composées du signal d'accélération du second capteur (MEMS2) et des deux signaux d'accélération selon les deux axes préservés (J,K ; I,K) du premier capteur (MEMS1).

2. Accéléromètre industriel (1) selon la revendication précédente dans lequel le premier circuit intégré (MEMS1) et le second circuit intégré (MEMS2) sont respectivement disposés sur deux faces opposées du circuit imprimé planaire (2).

3. Accéléromètre industriel (1) selon la revendication 1 lequel le premier circuit intégré (MEMS1) et le second circuit intégré (MEMS2) sont disposés sur une même face du circuit imprimé planaire (2).

4. Accéléromètre industriel (1) selon l'une des revendications précédentes dans lequel le circuit imprimé planaire (2) est disposé dans un corps rigide tubulaire.

5. Accéléromètre industriel (1) selon l'une des revendications précédentes dans lequel le circuit imprimé planaire (2) est relié à un connecteur électrique (1b) ou un câble intégral.

6. Accéléromètre industriel (1) selon l'une des revendications précédentes dans lequel le circuit imprimé planaire (2) est rigide.

7. Accéléromètre industriel (1) selon l'une des revendications 1 à 5 dans lequel le circuit imprimé planaire (2) est flexible.

8. Accéléromètre industriel (1) selon l'une des revendications précédentes dans lequel le circuit imprimé planaire (2) porte également un circuit de conditionnement.

9. Utilisation d'un accéléromètre industriel (1) selon l'une des revendications précédentes pour la surveillance vibratoire d'une machine industrielle (E) présentant un axe principal de vibration (P), l'utilisation comprenant la fixation de l'accéléromètre (1) sur la machine industrielle (E) de telle sorte que l'axe unique de mesure (A) du second capteur (MEMS2) soit parallèle à l'axe principal de vibration (P) de la machine industrielle.

10. Système comprenant une machine industrielle (E) présentant un axe principal de vibration (P) et, fixée sur cette machine industrielle, un accéléromètre industriel (1) selon l'une des revendications 1 à 8, l'axe unique de mesure (A) du second capteur (MEMS2) étant parallèle à l'axe principal de vibration (P).

## Patentansprüche

1. Industrieller Beschleunigungsmesser (1), der geeignet ist, um Messungen entlang drei Messachsen eines rechteckigen Trieders insbesondere für die Schwingungsüberwachung einer industriellen Maschine (E, E') bereitzustellen, der Beschleunigungsmesser (1) umfassend eine erste und eine zweite mikroelektromechanische integrierte Schaltung (MEMS1, MEMS2), auf einer ebenen gedruckten Schaltung (2) angeordnet sind;
- wobei sich die erste integrierte Schaltung (MEMS1) entlang einer ersten Ebene erstreckt und einen ersten dreiachsigen Sensor bildet, der geeignet ist, um Signale einer Beschleunigung entlang der drei Messachsen (I, J, K) bereitzustellen, wobei zwei Messachsen (I, J) in der ersten Ebene liegen;
- wobei sich die zweite integrierte Schaltung (MEMS2) entlang einer zweiten Ebene erstreckt und einen zweiten einachsigen Sensor bildet, der geeignet ist, um ein Signal der Beschleunigung entlang einer einzelnen Messachse (A) bereitzustellen, die in der zweiten Ebene liegt, wobei der zweite einachsige Sensor (MEMS2) mindestens eine verbesserte Eigenschaft im Vergleich zu den Eigenschaften des ersten dreiachsigen Sensors (MEMS1) aufweist;
wobei die erste und die zweite Ebene beide in derselben Ebene wie die gedruckte Schaltung sind und die erste und die zweite integrierte Schaltung (MEMS1, MEMS2) auf der ebenen gedruckten Schaltung (2) so eingerichtet sind, dass die einzelne Messachse (A) des zweiten Sensors (MEMS2) parallel zu der einen der zwei Messachsen (I; J) ist, die in der ersten Ebene des ersten Sensors (MEMS1) liegen, wobei die zwei anderen Achsen (J,K; I,K) als die "erhaltenen Achsen" bezeichnet werden, wobei die Messungen, die durch den industriellen Beschleunigungsmesser (1) bereitgestellt werden, aus dem Signal der Beschleunigung des zweiten Sensors (MEMS2) und zwei Signalen der Beschleunigung entlang der zwei erhaltenen Achsen (J,K; I,K) des ersten Sensors (MEMS1) zusammengesetzt sind.

2. Industrieller Beschleunigungsmesser (1) nach dem vorstehenden Anspruch, wobei die erste integrierte Schaltung (MEMS1) und die zweite integrierte Schaltung (MEMS2) jeweils auf zwei gegenüberliegenden Flächen der ebenen gedruckten Schaltung (2) angeordnet sind.

3. Industrieller Beschleunigungsmesser (1) nach Anspruch 1, wobei die erste integrierte Schaltung (MEMS1) und die zweite integrierte Schaltung (MEMS2) auf einer gleichen Fläche der ebenen gedruckten Schaltung (2) angeordnet sind.

4. Industrieller Beschleunigungsmesser (1) nach einem der vorstehenden Ansprüche, wobei die ebene gedruckte Schaltung (2) in einem starren röhrenförmigen Körper angeordnet ist.

5. Industrieller Beschleunigungsmesser (1) nach einem der vorstehenden Ansprüche, wobei die ebene gedruckte Schaltung (2) mit einem elektrischen Verbinder (1b) oder einem integrierten Kabel verbunden ist.

6. Industrieller Beschleunigungsmesser (1) nach einem der vorstehenden Ansprüche, wobei die ebene gedruckte Schaltung (2) starr ist.

7. Industrieller Beschleunigungsmesser (1) nach einem der Ansprüche 1 bis 5, wobei die ebene gedruckte Schaltung (2) flexibel ist.

8. Industrieller Beschleunigungsmesser (1) nach einem der vorstehenden Ansprüche, wobei die ebene gedruckte Schaltung (2) auch eine Konditionierungsschaltung trägt.

9. Verwendung eines industriellen Beschleunigungsmessers (1) nach einem der vorstehenden Ansprüche für die Schwingungsüberwachung einer industriellen Maschine (E), die eine Hauptschwingungsachse (P) aufweist, die Verwendung umfassend die Befestigung des Beschleunigungsmessers (1) an der industriellen Maschine (E) derart, dass die einzelne Messachse (A) des zweiten Sensors (MEMS2) parallel zu der Hauptschwingungsachse (P) der industriellen Maschine ist.

10. System, umfassend eine industrielle Maschine (E), die eine Hauptschwingungsachse (P) und, an dieser industriellen Maschine befestigt, einen industriellen Beschleunigungsmesser (1) nach einem der Ansprüche 1 bis 8 aufweist, wobei die einzelne Messachse (A) des zweiten Sensors (MEMS2) parallel zu der Hauptschwingungsachse (P) ist.

## Claims

1. Industrial accelerometer (1) which is suitable for supplying measurements along three measurement axes of a rectangular trihedron, in particular for monitoring the vibrations of an industrial machine (E, E'), the accelerometer (1) comprising first and second micro-electromechanical integrated circuits (MEMS1, MEMS2) which are arranged on a planar printed circuit (2);
- the first integrated circuit (MEMS1) extending in a first plane and constituting a first triaxial sensor which is suitable for supplying acceleration signals along the three measurement axes (I, J, K), two measurement axes (I, J) being in the first plane;
- the second integrated circuit (MEMS2) extending in a second plane and constituting a second monoaxial sensor which is suitable for providing an acceleration signal along a single measurement axis (A) in the second plane, the second monoaxial sensor (MEMS2) having at least one improved characteristic in comparison to the characteristics of the first triaxial sensor (MEMS1);
the first and second planes both being coplanar with the printed circuit, and the first and second integrated circuits (MEMS1, MEMS2) being arranged on the planar printed circuit (2) so that the single measurement axis (A) of the second sensor (MEMS2) is parallel to one of the two measurement axes (I; J) in the first plane of the first sensor (MEMS1), the two other axes (J, K; I, K) being designated as the "preserved axes", the measurements provided by the industrial accelerometer (1) being composed of the acceleration signal of the second sensor (MEMS2) and of the two acceleration signals along the two preserved axes (J, K; I, K) of the first sensor (MEMS1).

2. Industrial accelerometer (1) according to the preceding claim, wherein the first integrated circuit (MEMS1) and the second integrated circuit (MEMS2) are respectively arranged on two opposite faces of the planar printed circuit (2).

3. Industrial accelerometer (1) according to claim 1, wherein the first integrated circuit (MEMS1) and the second integrated circuit (MEMS2) are arranged on the same face of the planar printed circuit (2).

4. Industrial accelerometer (1) according to any of the preceding claims, wherein the planar printed circuit (2) is arranged in a rigid tubular body.

5. Industrial accelerometer (1) according to any of the preceding claims, wherein the planar printed circuit (2) is connected to an electrical connector (1b) or an integral cable.

6. Industrial accelerometer (1) according to any of the preceding claims, wherein the planar printed circuit (2) is rigid.

7. Industrial accelerometer (1) according to any of claims 1 to 5, wherein the planar printed circuit (2) is flexible.

8. Industrial accelerometer (1) according to any of the preceding claims, wherein the planar printed circuit (2) also carries a conditioning circuit.

9. Use of an industrial accelerometer (1) according to any of the preceding claims for monitoring the vibration of an industrial machine (E) having a main axis of vibration (P), the use comprising fixing the accelerometer (1) on the industrial machine (E) such that the single measurement axis (A) of the second sensor (MEMS2) is parallel to the main axis of vibration (P) of the industrial machine.

10. System comprising an industrial machine (E) having a main axis of vibration (P) and, fixed to this industrial machine, an industrial accelerometer (1) according to any of claims 1 to 8, the single measurement axis (A) of the second sensor (MEMS2) being parallel to the main axis of vibration (P).
